(19) Europäisches Patentamt
European Patent Office
Office européen des brevets

(11) EP 3 244 344 A1

(12) # EUROPEAN PATENT APPLICATION

(43) Date of publication:
**15.11.2017 Bulletin 2017/46**

(21) Application number: **16169562.2**

(22) Date of filing: **13.05.2016**

(51) Int Cl.:
***G06K 9/00*** *(2006.01)*
***G08B 13/196*** *(2006.01)*
***G06T 7/20*** *(2017.01)*
***G08G 1/16*** *(2006.01)*
***H04N 7/18*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **DOS Group S.A.**
**6850 Mendrisio (CH)**

(72) Inventors:
- **DONINELLI, Stefano**
  **6850 Mendrisio (CH)**
- **CALABRESE, Raffaele**
  **6850 Mendrisio (CH)**
- **MANDICA, Claudio**
  **6850 Mendrisio (CH)**
- **PORETTI, Giacomo**
  **6850 Mendrisio (CH)**
- **GALLI, Vanni**
  **6850 Mendrisio (CH)**
- **BROCCO, Amos**
  **6850 Mendrisio (CH)**
- **FOSSATI, Andrea**
  **6850 Mendrisio (CH)**
- **ROTHE, Rasmus**
  **6850 Mendrisio (CH)**

(74) Representative: **Galassi, Alessandro**
**PGA S.p.A. Milano**
**Succursale di Lugano**
**Via Castagnola 21C**
**6900 Lugano (CH)**

(54) **GROUND OBJECT TRACKING SYSTEM**

(57) A ground object tracking system (100), comprising:
- a data processing unit (302) comprising electronic stream receiving means (311), suitable for receiving a plurality of image streams (300, 301) from a plurality of cameras (201-209) placed in plurality of respective positions in the territory;
- a memory, suitable for transceiving data to said data processing unit, said memory having stored therein at least one electronic file containing a plurality of parameters (500-508) of an object, wherein said plurality of parameters (500-508) contains at least dimensional details for at least identifying the type of object (10, 20) in a frame of an image stream of said plurality of image streams (300, 301);
- said data processing unit (302) processing said image streams (301, 302) and extracting at least one frame from said image streams and being configured for electronically processing said frame identifying an object (10, 20) contained therein and electronically associating a plurality of parameters (500-508) thereto upon said electronic processing; and
- said data processing unit (302) being configured to electronically estimate at least a direction (D) and/or speed of said object (10, 20), and to transmit data containing an electronic prediction of position of said object (10, 20);
- wherein said data processing unit (302) comprising filtering means predicting said a future position of said object (10, 20) in accordance to said direction (D) estimation and at least one of said plurality of parameters (500-508) associated to said object.

FIG.1

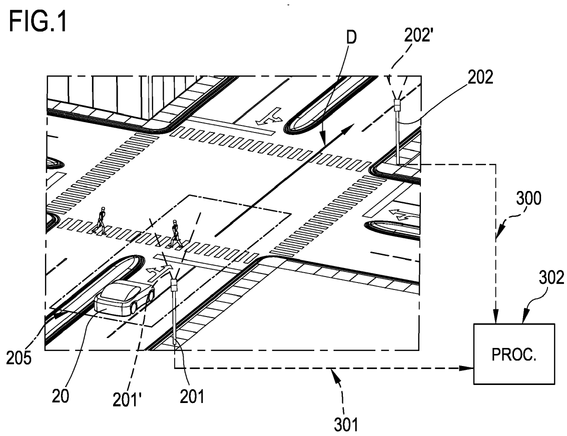




Printed by Jouve, 75001 PARIS (FR)

**Description**

Field of the invention

The present invention relates to the field of object detection in images, and in detail refers to a ground object tracking system.

The present invention further refers to a method for object tracking.

**Background art**

Today most part of the inhabited areas see the presence of cameras capturing video sequences or streams for certain areas.

The Applicant has seen the urban areas have plenty of simultaneously active cameras, whose framed areas can cover a significant part of the territory.

The Applicant has noticed that cameras placed in the territory help law enforcement to better identify criminal actions, thieves, and immediately identify car accidents.

Specifically concerning criminal actions and thieves, today the usage of cameras is widespread in enhancing the intelligence activity for helping solving or speeding up the search and capture of the people responsible of those actions, as well as to increase the number of data which can be provided to the agencies at the moment a certain object is traced.

The camera streams are manually analyzed by technically expert people, who have to see the entire sequence thereof in order to choose the right frame to identify possible interesting subjects.

The action of manually analyzing the streams provided by the cameras is time consuming. In addition, when the streams to be analyzed are long or in a significant number, the attention of the experts can reduce with the forthcoming risk of losing interesting details.

The scope of the present invention is to disclose a ground object system and an associated method of operation that helps to solve the aforementioned drawbacks.

**Summary of the invention**

For the purposes of the present invention, with the term "object" is meant any human or human-crafted object suitable to move in a certain area, preferably on the ground.

Therefore, with the wording "object" shall be comprised in a non-limiting extent a vehicle, either it be a motorcycle, a truck, a trailer, a bicycle, or a car, or at least one person.

According to the present invention it is disclosed a ground object tracking system, comprising:

- a data processing unit comprising electronic stream receiving means, suitable for receiving a plurality of image streams from a plurality of cameras placed in plurality of respective positions in the territory;
- a memory, suitable for transceiving data to said data processing unit, said memory having stored therein at least one electronic file containing a plurality of parameters of an objects, wherein said plurality of parameters containing shape details for at least identifying the type of object in a frame of an image stream of said plurality of image streams;
- wherein said data processing unit processing said image streams and extracting at least one frame from said image streams and electronically processing said frame identifying an object contained therein and electronically associating a plurality of parameters thereto upon said electronic processing; and
- wherein said data processing unit being configured to electronically estimate at least a direction and/or speed of said object, and to transmit data containing an electronic prediction of subsequent and/or previous position of said object;
- wherein said data processing unit comprising filtering means predicting said a subsequent and/or previous position of said object in accordance to said direction estimation and at least one of said plurality of parameters associated to said object.

Those parameters become metadata electronically associated to the object once identified on said at least one frame.

Preferably, said filtering means are electronic software-defined filtering means. This allows for a very flexible definition and adaptation of the operating algorithm of the filtering.

According to an aspect of the present invention, the system according to the present invention further comprises electronic selection means being selectively activated by said filtering means, said electronic selection means selecting at least one further camera among the plurality of cameras transmitting said image streams to said electronic stream receiving means, and wherein said data comprise visual indication of the position of said cameras over a territory.

According to a further aspect of the present invention, said memory contains at least a georeferenced position of each of said cameras, and wherein said selection means select said at least one camera in accordance to an electronic computation of distance and direction over time basing on the respective position of the camera of the image stream analyzed and the respective positions of the resting part of the cameras which are included within a maximum radius from the camera of the image stream analyzed that is at least equal to the travel distance electronically computed in accordance to said speed and direction of the object.

According to a further aspect of the present invention, said radius is direction-dependent and considers a road map previously stored in at least one memory accessible from said data processing unit.

According to a further aspect of the present invention, said selection means electronically are configured to extract the at least one image stream of said at least one camera, and cause said data processing unit to electronically identify automatically said object in a subsequent instant of time.

According to a further aspect of the present invention, the data processing unit is configured for performing a an electronic scalar product between the features of an object in at least one frame of a first analyzed image stream with the features of other similar objects found in image streams of said plurality of cameras which are included within a maximum radius from the camera of the image stream analyzed.

According to a further aspect of the present invention, said parameters at least comprise a first parameter identifying a vehicle or a person, and said parameter contains dimensional data for both said vehicle and said person.

According to a further aspect of the present invention, the said estimating means electronically are configured for calculating a maximum speed threshold, based on said first parameter associated.

In detail, basing on said maximum speed threshold, said maximum radius is electronically computed by said means keeping into account said maximum speed threshold.

According to the present invention is disclosed a method for ground object tracking, said method being characterized in that it comprises:

- a step of data processing, by means of a data processing unit, said step comprising receiving or processing a plurality of image streams from a plurality of cameras placed in plurality of respective positions in the territory;
- loading from a memory to a data processing unit at least one electronic file containing a plurality of parameters of an objects, wherein said plurality of parameters contains dimensional details for at least identifying the type of object;
- a further and subsequent step of processing said image streams and of extracting at least one frame from said image streams and electronically processing said frame identifying an object contained therein and electronically associating a plurality of parameters thereto upon said electronic processing; and
- a subsequent step of electronic estimation of at least a direction and/or speed of said object, and of transmission of data containing an electronic prediction of position of said object;
- a step of activation of filtering means of said data processing unit predicting a future position of said object in accordance to said direction estimation and at least one of said plurality of parameters associated to said object.

According to an aspect of the present invention, said electronic prediction of position causes the execution of a step of electronically selecting at least one further camera among the plurality of cameras transmitting said image streams to said electronic stream receiving means, and wherein said data comprise visual indication of the position of said cameras over a territory; said step of electronically selecting at least one further camera being performed by electronic selection means being selectively activated by said filtering means; said step of electronically selecting at least one further camera being recursively repeated.

According to a further aspect of the present invention, said method comprises a step of storing into said memory at least one georeferenced position of each of said cameras, and wherein said selection means select said at least one camera in accordance to an electronic computation of distance and direction over time basing on the respective position of the camera of the image stream analyzed and the respective positions of the resting part of the cameras which are included within a radius from the camera of the image stream analyzed that is at least equal to the travel distance electronically computed in accordance to said speed and direction of the object.

According to a further aspect of the present invention, said method comprises defining a radius which is direction-dependent and comprises electronically storing a road map in at least one memory accessible from said data processing unit and the step of definition of said radius considers said road map previously stored in said least one memory.

According to a further aspect of the present invention, the method comprises a step of performing a an electronic scalar product between the features of an object in at least one frame of a first analyzed image stream with the features of other similar objects found in image streams of said plurality of cameras which are included within a maximum radius from the camera of the image stream analyzed.

According to a further aspect of the present invention, said method comprises the step of electronically extracting the at least one image stream of said at least one camera, and further comprises a step of electronically automatically identifying said object in a subsequent instant of time.

According to a further aspect of the present invention, said method further comprises a step of electronically calculating a maximum speed threshold, based on a first parameter of said plurality of parameters stored in said memory.

In detail said maximum speed threshold is used for defining said maximum radius.

In a further aspect of the present invention, said method further comprises a step of object tracking onto said at least one frame, followed by a step of electronic features extraction from said frame and a subsequent step of dimensionality reduction, and wherein a step of classification of said object according to at least a first parameter stored in said memory comprises a step of merging and/or processing electronic data received from said electronic feature extraction and said step of dimensionality reduction.

In a further aspect of the present invention, said estimation is performed in a step of deep learning, made at least partially by said data processing unit.

In a further aspect of the present invention, said method comprises a step of providing the user with auxiliary means for manually selecting and assigning parameters, which are present in said at least one file, to the object yet identified on said at least one frame.

Specifically, said auxiliary means can include means for performing an electronic quasi-illumination invariant background subtraction to said at least one frame.

In a further aspect of the present invention, said method comprises a step of providing to the user a degree of confidence in the assignment of the parameters to said object.

Specifically, said degree of confidence is provided for each one of the parameters associated to the object in the at least one analyzed frame.

## Description of figures

Further details and aspects of the invention will be disclosed in a preferred and non-limiting embodiment with reference to the annexed figures, wherein:

- figure 1 shows a perspective view of a urban area comprising objects to track with the system according to a first preferred and non-limiting embodiment of the present invention;
- figure 2 shows a 2D map of a city, with the marking of a plurality of cameras suitable to capture frames of a surrounding area.
- figure 3 shows a perspective view of a urban area comprising objects to track with the system according to a second preferred and non-limiting embodiment of the present invention;
- figure 4 shows discloses an electronic schematic diagram of a processing unit according to an embodiment of the present invention;
- figure 5 shows a detail of object features or parameters, contained in a memory of the system according to the present invention, said features or parameters being used for being associated to the object to be tracked;
- figure 6 shows a flow chart of the operation of the system according to the present invention;
- figure 7 shows a detail of operation of an algorithm of classification of a certain object framed by the cameras used in the system according to the present invention;
- figure 8 shows a 2D map of a city, with the marking of a plurality of cameras suitable to capture frames of a surrounding area, of which a part thereof is sub selected in order to track the object according to the associated classification.

## Detailed description of the invention

With reference to the annexed figures and in detail to figure 1, with the reference number 100 is marked a ground object tracking system.

The system 100 is conceived for helping agencies or law enforcement persons to follow objects over a certain area, either being urban or suburban, with an intelligent estimation of a plurality of positions of the object on the territory based on the acquisition of a plurality of video streams from a plurality of cameras arranged on the territory. The estimation of the plurality of positions can be electronically performed basing either in real-time acquisition or by post processing a plurality of frames coming from various cameras arranged on the territory. The estimation of positions is made recursively through a specific process, performed with the aid of a single or multiple data processing unit receiving or anyway acquiring streams from a plurality of cameras.

For the purposes of the present invention, with the wording "ground object" it is meant an object suitable for moving to a limited distance from the ground, and more in detail not being able or specifically conceived for being capable of flying under a controlled condition.

The scope of the system therein disclosed is therefore not to track a plane, an helicopter or a similar machine, but to track object that substantially stand on the ground.

For the purposes of the present invention, with the wording "camera" it is meant any device suitable for framing a plurality of images in a temporal sequence, preferably but in a non-limiting extent on a constant time interval from one another, and of transmitting the plurality of images as an image stream to a remote electronic receiving device either by means of a wired or a wireless communication.

As shown in figure 1, the system 100 comprises at least one data processing unit 302 suitable of receiving image streams from a plurality of cameras 201, 202 arranged on the ground on respective positions of a territory which in the image shown is represented by a portion of an urban area.

With the wording "receiving image streams" shall be meant any possibility of acquiring at least a part of those image streams, up to a single frame, either by directly and real-time accesses to a stream coming from a camera at the time of electronic processing, or by accessing to a plurality of frames stored in a memory or database electronically accessible by said data processing unit 302.

In one particular embodiment, therefore, each of the cameras 201, 202 frames a specific sub-portion of the territory and transmit a respective image stream 301, 302 to the data processing unit. The image streams 301, 302 are preferably transmitted uninterruptedly and simultaneously, towards a data processing unit 302. Otherwise, in another embodiment corresponding to the post-processing version of the system, the data processing unit 302 performs a tracking of the object starting form data previously collected and stored in one or more memories or databases.

For the purposes of the present invention, with the wording "data processing unit" shall be meant any processor, electronic computer or network or assembly of processors or electronic computers suitable for processing images of a stream in order to detect an object therein contained.

The data processing unit comprises electronic filtering means, collecting data from a plurality of image streams and having filtering means for predicting a subsequent or previous position of the object in accordance to an estimated direction of the object itself, electronically calculated on at least one frame of said image stream and further in accordance to the type of object identified on said at least one frame, wherein the type of object is identified by means of electronically appending a plurality of parameters to the object itself.

The wording "subsequent or previous position" is herewith used since the streams that are analyzed by the software algorithm running on the data processing unit 302 is capable of working in real time, i.e. on streams that are actually transmitted by the plurality of cameras, as well as in a post-processing operative condition, wherein in contrast the data processing unit 302 operates on a plurality of image streams or frames stored in a database or in a technically equivalent storage means.

The Applicant has considered that allowing the two aforementioned possibilities allows for the best possible flexibility of the system. In particular, when working in post-processing, the system according to the present invention results capable of tracing the path of an object 10, 20 in instants of time which are "future" with respect to the first analyzed frame, and "past" with respect to the first analyzed frame. The post processing operation can lead to a faster tracking of the object over the territory with respect to a tracking in real time. In fact, while post processing a plurality of frames yet stored in a memory or database, the limit in the electronic processing speed is given by the speed of the processor(s) and the maximum allowable bandwidth of the memory and channels transferring data from the memory to the processor(s). In contrast, when the system is conceived for operating in real time, while the "past" positions - if the respective frames are stored - can be theoretically processed at the same speed that could be achievable when the system fully operates in post-processing, the "future" estimation of the position of the object, even if estimated, can be actually confirmed only when the object will be actually present under the sub portion of territory framed by one selected camera.

In other words, the electronic filtering means of the data processing unit 302 operate an electronic filtering for predicting another position of the object 10, 20; the data processing unit 302 further comprises selection means, that as it will be better disclosed in the subsequent portion of description, are conceived for selecting another camera and searching, in the image stream thereof, at least one further frame containing the same object yet identified in the analyzed frame. In a preferred but non-limiting embodiment, said electronic selection means are selectively activated by the electronic filtering means once at least a direction (identified by the arrow D) of the object 10, 20 to track is detected on said at least one frame.

For the purposes of the present invention, preferably said electronic filtering means and said selection means are software defined.

As can be seen from figure 1, in a certain area 205 of a territory can be present principally two types of objects that are classified according at least two parameters including size and maximum reachable speed. In detail, those objects can be vehicles 20 and individuals 10.

The Applicant has noticed that individuals 10 can reach a speed which is significantly lower than vehicles 20, and this means that when individuals 10 are tracked over a certain portion of a territory, the maximum travelable distance over a given period of time T, is once more significantly lower than the travelable distance of a vehicle 20.

Furthermore the Applicant has noticed that vehicles 20 have significantly more limitations in moving across a certain territory with respect to vehicles 20, which are limited to move in certain areas, typically roads, with less possibility of sudden changes of direction with respect to individuals 10.

As can be seen in figure 2, over a certain urban area there is a significant amount of cameras 201-209. The idea that stands at the base of the system 100 according to the present invention, is to collect as much as possible automatically the streams from those cameras 201-209 in order to automatically track the path followed by an object 10, 20. The higher is the number of the cameras 201-209 per area of territory is, the higher can be the accuracy and precision of the system 100 in tracking the object.

Even if in figure 1 is disclosed a system wherein the cameras 201, 202 directly transmitted the data stream towards a data processing unit 302, this shall not be intended as the sole and limiting embodiment. In figure 3 is shown a further embodiment of the system 100 according to the present invention, wherein the data processing unit 302 receives image streams from a plurality of subsystems 303, 303' remotely positioned, wherein each of said subsystems 303, 303' has a memory that is conceived to receive and store said image streams and to keep them recorded in order to be transmitted at least in part to the data processing unit 302.

This renders the system 100 according to the present invention suitable to be applied for those applications which yet have local storage means for collecting image streams from private cameras, for example outside shops or banks.

As shown in figure 4, the data processing unit 302 of the system 100 comprises a microprocessor or network of processors 309, connected to a local memory 310 and to interface means 311, of a known type, which are deputed to receiving the image streams coming from the cameras.

In the local memory 310 is stored in advance at least one file containing parameters used to classify the object 10, 20 which is framed by the cameras. Such parameters help the program that runs on the data processing unit 302 to perform a precise classification of the object 10, 20, at least defining a type thereof in order to be capable of electronically calculating a maximum reachable speed and direction thereof and to predict a future position of said object.

As shown in figure 5, the parameters 500 that are stored in said at least one file comprise in a preferred and non-limiting embodiment, a list of first level 501 of parameters including:

- the type of object;
- the colour thereof;
- the size thereof;
- the form;
- accessories on the object;
- direction; and
- speed.

In detail, the parameters 500 stored in the file are stored as a branched sequence of sublevels 501 of features, and then for the parameter "type of object", a first sublevel includes distinguishing between a vehicle and a person. A vehicle can be selected among a plurality of types thereof, comprising caravans, trucks, motorbikes or autos. These types of vehicles are included in a further sublevel 503 of type of vehicles.

The person can be either classified as being a man or a woman. The gender of the person is included in a sublevel 504 of gender type.

The types of vehicles, include data regarding at least an overall dimension of the vehicle, or a shape of the vehicle, according to a plurality of points of view, in order to help the software program running on the data processing unit to find a particular type of object according to its shape.

In particular the Applicant has considered that the first parameter 500 to be analyzed in order to first append a feature to the object 10, 20 in the analyzed frame is a shape parameter, part of the dimensional parameter, which is advantageously used to differentiate at least vehicles from people.

According to a specific aspect of the present invention the shape parameter is adapted electronically to the perspective position and or distance with respect to the framing camera. This implies that the shape parameter is not simply a mask for example identifying a more squared shape for being a sort of lorry or truck instead of a person, but can be adapted electronically to match the same lorry or truck according to a plurality of points of view that could be those of the object with respect to the camera.

Those details of the vehicles are included in the sublevels 504, 505 of the form of the object 10, 20.

Further sublevels 507, 508 of the "accessories" parameters help the software program to enhance the certainty of classification appending to the general type of objects some extra features like for example a trailer or a baggage rack for a vehicle or the presence of glasses, particular type of trousers or shoes for a person, that help the program to search in other image streams received from the cameras surrounding that of the stream which is currently analyzed to identify the same object.

Further parameters like the colour of specific parts of the object 10, 20 yet identified in the frame 401 of the analyzed stream 400, can be corrected or manually introduced by the operator by means of known user-interface means.

This results particularly helpful when the frame is captured by the respective camera in a critical light or perspective condition, such as to render the data processing unit 302 unable to surely identify such a parameter in a fully automatic procedure.

In particular the data processing unit 302 is conceived to automatically search in the frames a combination of the shape of the object together with eventual perspective distortions in accordance with a matching of colors similar to that which was found in the first analyzed frame 401. In such a way, there is a reduction of false negatives that could result from different variations illumination of the scene framed by the other cameras and further permits to better adapt to variations of contrasts and colors that are typical of certain types of cameras with respect to others.

Once the data processing unit 302 electronically appends at least one of those parameters to the object 10, 20 identified in said at least one frame 401, the parameters become metadata that are used by the electronic filtering means in association to the direction estimation for detecting a subset of the whole set of cameras wherein the object is further searched.

Specifically the system 100 according to the present invention provides for transmitting to a monitor for the user or operator also a request of performing a quasi-illumination invariant background subtraction that can help the user itself in reducing the level in uncertainty in correcting or manual assigning a specific feature to the object 10, 20.

Therefore, said transmission to the monitor as well as the availability of an option for manually assigning features to the object 10, 20 yet identified in at least one frame 401 of the image streams 400 constitute auxiliary means for object classification.

The "direction" parameter includes an identification of the direction followed or either estimated by a tracked object on at least said one frame of the image stream received by the camera, preferably but in a non-limiting extent, with the indication of a cardinal degree. Preferably a sublevel of cardinal degrees comprises quarter of complete rotation, i.e. between 0-90°, then 90-180°, 180-270° and 270-360°.

This allows for a rough estimation of the direction of the tracked object 10,20 without implying at first a relevant computation effort for defining a precise direction estimation that could anyway change not only for the behavior of the object but that is also guided by the territorial configuration of the area surrounding the object itself, for example due to the presence of viaducts, tunnels, buildings, lakes,...

In the "speed" parameter there is an indication of at least a maximum speed threshold for the two types of objects, i.e. vehicles of persons. Said maximum speed threshold is used to allow the selection at least in a first electronic computation step, of a radius R from the point wherein the camera whose frame is used is actually arranged. Said maximum speed threshold can be for example 200 km/h for a vehicle and 20 km/h for an individual.

In fact, the georeferenced location of each of the cameras 201-209 on the territory is stored in advance on the system according to the present invention. Said georeferenced location is used by the data processing unit 302 to first define a starting point with a couple of coordinates, and electronically calculate a radius R within which the object 10,20 can arrive according to at least the first parameter, i.e. the object "type", previously associated to the object in a frame.

Furthermore, not only the georeferenced location but also the indication of the direction of pointing of each of the cameras 201,209 is stored. This is useful because allows the data processing unit 302 to better identify associate a quadrant of direction to the object in the examined frame.

Figure 6 better helps the description in describing the overall process of the system according to the present invention.

The system according to the present invention performs a method which is at least partially implemented by means of a data processing unit wherein at first a user, that can be an operator of a law enforcement entity, at first selects with known technical means at least one camera among the plurality of cameras 201-209 (block 1000). According to an exemplification shown in figure 7, let's suppose that the chosen camera is the one with reference 206.

The camera is chosen electronically by said user, by means of known technical means that include with a non-limiting extent, a mouse and/or a keyboard and/or a trackball and/or a tactile screen or tablet or any combination thereof.

Then, the user can provide a selection of a frame to start the electronic computation by the data processing unit 302. In this selection the user, by means of known technical means, provides to the system of an object to track (block 1001).

Eventually, the user can provide to the system 100 also some rough details that are used to better categorize the type of object, i.e. at least excluding vehicles from individuals or vice versa.

The memory wherein the parameters are store is then accessed (block 1002) and the image stream, in at least one frame thereof, is processed in order to associate to the selected object 10, 20 the most possible number of features according to those which are recorded in said memory (block 1003).

Once the principal features of the first level are chosen, then the system automatically further processes the image stream in order to assign the object further features which are part of the sublevels as previously disclosed (block 1004).

The aforementioned steps can be made in a single or in a successive approximation algorithm, eventually by automatically considering the same object in a previous and/or subsequent frame of the same image stream.

Once the type of object is electronically calculated on the object 10, 20, the system 100 according to the present invention provides for automatically selecting the maximum speed threshold and the rough direction that the object has according to the position in the frame (block 1005).

The rough direction can be estimated by means of a motion history image classification, which can be considered as a mask image that indicates where the motion of the object 10, 20 yet identified occurs during a certain predetermined small time interval. The rough classification of direction is therefore estimated over a plurality of closely time related frames of an image stream, and can be expressed by the formula:

$$MHI_t^i(x,y) = \begin{cases} 0 & if \sum_{k=0}^{\tau} A_{t-k}^i(x,y) = 0 \\ MHI_{\max} & otherwise \end{cases}$$

Wherein $A_{t-k}^i(x,y)$ is the pixel value of the translation and scale compensated object mask *i* at position (x,y) at the time *t* of analysis, and wherein τ is the small time interval.

This operation allows for better defining a radius within which the object 10, 20 can move, and prevents that the system 100 has to choose among a subsequent set of cameras whose frames have to be analyzed being too wide with respect to the maximum travelable distance that the object can actually travel. In other words, this can reduce the computation burden for the system 100 object of the present invention, and further allows to increase the tracking speed of the system, rendering it operative in substantially a real time.

In a first embodiment, the radius electronically calculated by the data processing unit 302 starting from the camera 206 is constant with respect to the angular direction D of the object.

In another embodiment, the radius R calculated by the data processing unit 302 starting from the camera 206 is not constant with respect to the angular direction D of the object and defines not a circle but a differently shaped area whose border depends and is electronically calculated upon the features of the territory.

The features of the territory are extracted by an electronic map, previously stored on memory means within the data processing unit 302 or either electronically accessible therefrom, preferably but in a non-limiting extent in real time.

This leads to a more precise prediction of the future position of the object 10, 20 after a certain period of time from the moment of the analyzing of the frame.

If for example the travelable distance comprises a mountain, the radius in the direction of the mountain is significantly reduced locally with respect to the radius R in other sectors more planar, since an object, either it being a vehicle or an individual, cannot have the possibility of moving there as fast as they could do in a wide open land or in a highway.

According to an aspect of the present invention, with a shape parameter electronically adaptable according to the perspective of the object, it has been found that the precision of detection and appending of the parameter to the object is increased and produces more accurate results, as well as, while identifying further cameras within the radius R, false positives are reduced. This way, the burden of final sub selection or manual helping by the user for tracing the path of the object along the territory is significantly reduced, especially when a huge amount of cameras could potentially identify similar objects

The radius R is defined also with respect to a subsequent temporal instant with respect to the actual one, and that subsequent temporal instant is defined by the user. It is convenient to choose the least possible subsequent temporal instant with respect to the actual one in order to reduce the computation burden of the system, unless the reduction implies that no further cameras rest within the radius R. In figure 8 let's suppose that after 2 minutes from the moment of analysis of the system according to the present invention, the radius R comprises cameras 202, 209, 203, 204. Those cameras will be those whose image streams will be further processed by the data processing unit 302 for searching the presence of the object 10, 20.

Once the radius R over the direction is electronically estimated, the system 100 object of the present invention provides for searching for future areas according to the estimation (block 1006).

In this step, the data processing unit 302 selects the cameras whose georeferenced position rests within the radius R. Then the images streams of those cameras contained within the radius R are electronically automatically accessed and loaded by the data processing unit 302, which will search approximately a plurality of frames from said data streams being recorded after the predetermined subsequent time instant, and will electronically process them in order to search the object 10, 20 yet identified. The process is repeated iteratively, and this is schematically represented in figure 6 by the dashed line 1009.

Conveniently, the system 100 according to the present invention provides for giving the user a confidence degree for the automatically selected parameters over the object 10, 20. The degree of confidence can range for example in terms of percentage from 0 to 100%.

In fact, a particular feature of the system according to the present invention is that the further cameras among the plurality of available cameras are selected by means of a dot or scalar product of the object 10, 20 identified in the frame 401 of the image stream 400 analyzed with the features of other potentially identical objects that are found on the other image streams loaded from the resting part of the cameras that are within the radius R. The data processing unit electronically performs said dot or scalar product, and ranks the potential objects in the other cameras by means of a degree of confidence.

In such a way, the user is presented with a plurality of potential objects in at least one frame of image streams coming from cameras differing from the one of the stream 400 previously analyzed, which are ranked in accordance to a probability - represented by said degree of confidence - that the object found in the other frames is the same as the object 10, 20 found in frame 401 of the original stream.

The user is thus helped in deciding which is the actual camera that has framed the same object 10, 20 already identified, and he can therefore select the corresponding camera; with this selection, a datum of selection is received by the data processing unit 302 that reiterates the algorithm as already disclosed in the preceding part of the description. With this selection the data processing unit 302 automatically apprehends the path of the object 10, 20 an closes and improves the estimation of the other positions of the same.

Optionally, the system 100 can automatically alert remote devices in the area of subsequent finding of the object 10, 20 tracked. This is particularly relevant when the system 100 is made to operate in real time, since in that case there is reason to immediately alert personnel in the surrounding areas.

According to a preferred and non-limiting embodiment of the present invention, the system 100 comprises alerting means, suitable for providing a signal of alerting for mobile radios whose position is estimated in the neighborhood of the subsequent position of the object 10, 20 which is estimated by the data processing unit. In figure 6, this operation is marked by block 1008.

Figure 7 discloses an example of classification of an object starting from a frame 401 of an image stream 400.

Said frame 401, through the processing performed by the data processing unit 302 undergoes a step of object detection and/or tracking 403 from which the object 10, 20 is detected in the frame. From the object 10, 20 there is a feature extraction, represented in figure 7 by the feature extraction stage 404, from which a first output feeds a classification stage 409 and a second output 406 feeds a dimensionality reduction stage 407. The output of the dimensionality reduction stage 407 feeds the classification stage 409.

The classification stage 409 further comprises an input fed by a training database, which helps the stage and therefore the data processing unit 302 to append to the object 10, 20 the correct classification 410.

Resuming, once a single object 10, 20 is detected within a video frame 401, the object tracking is computed exploiting all classifications computed for the given detection:

- P0 = Position
- T0 = Time
- S0 = Speed
- D0 = Direction
- M0 = Morphological classifications
- C0 = Color classifications

In the subsequent part of the description reference n shall be considered as referring to the present instant of time, i.e. the present computation performed by the data processing unit 302. Reference *n-1* in contrast will refer to the previous computation. This, explicates while throughout the present description the wording "recursively" is used.

Objective of the method according to the present invention is to find the subsequent positions P1, P2, ..Pn in future timestamps T1, T2, .. Tn of the same detected objects 10, 20 exploiting information which is extracted from a plurality video stream compared with information associated with the given detection:

$$Pn, Tn = f(Pn\text{-}1, Tn\text{-}1, Sn\text{-}1, Dn\text{-}1, Mn\text{-}1, Cn\text{-}1)$$

Position P0 and speed S0 are used to filter the set of cameras, thus the set of streams compatible with the time delay T1 - T0 and the possible distance covered by the detected object type (vehicle or pedestrian).

As detections of the same objects 10, 20 within different scenes (i.e. different frames 401 or different streams also received from different cameras) and different light conditions, the detection of the same object 10, 20 in future timestamps can be applied in relational comparison.

As neural network and color classifications are not 100% fixed values but vectors of percentages, the approach of the recursive tracking queries need to modify these values at each single query.

Example: Assuemed C0 = [45 % red, 25 % brown], the search of successive detections of the same objects will be executed using the range C = [45 % +/- tolerance, 25 +/tolerance]

All this result in non-deterministic queries of a set of cameras detections using range values given by the start detection classifications.

$$P1, T1 = f(P0, T0, S0, D0, M0, C0)$$

As within traditional urban areas transit a multitude of pedestrian resp. vehicles, false positive results are very often. As consequence of this we had to find the way to help the user to easily identify real positive within a set of real and false positive result items.

All selected items are therefore ordered by a new feature computed by the scalar multiplication of the "fingerprint" value of each selected item with the "fingerprint" value of the original detection f0.

The sort of the result set by this criteria has the consequence of displaying on top of the result set objects that has the greater probability to be compatible with the user searched object 10, 20.

Visual detection and touch selection of the correct item fix into the algorithm the P1, T1 values, thus S1, D1, M1, C1 computed classification enabling to automatically launch search of successive P1, T1 step and so forth, while all fixed extracted information (picture, position) are displayed on a map shown on the computer screen for the user.

The advantages of the system therein disclosed are clear from the preceding description. In detail, said system allows for managing the information collected by a multitude of optical sensors (i.e. the cameras) enabling to analyze people and vehicles density flow patterns in public areas, while indexing and managing objects of interest for surveillance needs. The product consists in a computer vision systems monitoring video feeds and delivering reporting and alerts to human covering analytic and investigation needs against robberies, terror attacks and hooliganism.

With the system disclosed in the present invention, operators will inquiry the system inserting search criteria manually using a browser based/mobile application, receiving search results in seconds, thus with huge save of time.

Additionally, the system enables the collection of all sort of data enabling counting and covering people and vehicles flow analysis, thus helping in optimizing traffic and increasing efficiency in any retail business area. The benefits of the project is the delivery of an unique cloud-based service platform integrating different analytics through a unique environment, so to be easy to manage by final customers.

Specifically, the data processing unit 302 operates the identification of the object and its tracking using a deep learning algorithm from a plurality of sources of information, either they are informative or not, in a form of a unique database environment combining the power of relational database with the power of non-relational document database for the management of the huge amount of data related to object detection and classification in a unique cloud based technological environment.

It is finally clear that on the present invention further obvious additions or adaptations can be made, without departing from the scope of protection provided by the annexed claims.

## Claims

**1.** A ground object tracking system (100), comprising:

- a data processing unit (302) comprising electronic stream receiving means (311), suitable for receiving a plurality of image streams (300, 301) from a plurality of cameras (201-209) placed in plurality of respective positions in the territory;
- a memory, suitable for transceiving data to said data processing unit, said memory having stored therein at least one electronic file containing a plurality of parameters (500-508) of an object, wherein said plurality of parameters (500-508) contains at least shape details for at least identifying the type of object (10, 20) in a frame of an image stream of said plurality of image streams (300, 301);
- said data processing unit (302) processing said image streams (301, 302) and extracting at least one frame from said image streams and being configured for electronically processing said frame identifying an object (10, 20) contained therein and electronically associating a plurality of parameters (500-508) thereto upon said electronic processing; and
- said data processing unit (302) being configured to electronically estimate at least a direction (D) and/or speed of said object (10, 20), and to transmit data containing an electronic prediction of subsequent and/or previous position of said object (10, 20);
- wherein said data processing unit (302) comprising filtering means predicting a subsequent and/or previous position of said object (10, 20) in accordance to said direction (D) estimation and at least one of said plurality of parameters (500-508) associated to said object.

2. A system according to claim 1, further comprising electronic selection means being selectively activated by said filtering means, said electronic selection means selecting at least one further camera (202-209) among the plurality of cameras transmitting said image streams to said electronic stream receiving means (311), and wherein said data comprise visual indication of the position of said cameras over a territory.

3. A system according to any one of the preceding claims, wherein said plurality of parameters are metadata which are electronically associated to said object (10, 20) by said data processing unit (302).

4. A system according to claim 1, wherein said memory contains at least a georeferenced position of each of said cameras, and wherein said selection means select said at least one camera in accordance to an electronic computation of distance and direction over time basing on the respective position of the camera of the image stream (400) analyzed and the respective positions of the resting part of the plurality of cameras which are included within a maximum radius (R) from the camera of the image stream (400) analyzed that is at least equal to the travel distance electronically computed in accordance to said speed and direction of the object (10, 20).

5. A system according to claim 4, wherein said radius (R) is direction-dependent and considers a road map previously stored in at least one memory accessible from said data processing unit (302).

6. A system according to any one of the preceding claims, wherein said selection means electronically are configured to extract the at least one image stream of said at least one camera, and cause said data processing unit (302) to electronically identify automatically said object (10, 20) in a subsequent instant of time.

7. A system according to any one of the preceding claims, wherein said parameters (500, 508) at least comprise a first parameter identifying a vehicle or a person, and said parameter contains dimensional data for both said vehicle and said person.

8. A system according to claim 7, wherein estimating means performing said electronic estimation are configured for calculating a maximum speed threshold, based on said first parameter associated to the object.

9. A system according to claim 8, wherein said maximum radius is electronically computed by said means keeping into account said maximum speed threshold.

10. A system according to any one of the preceding claims when depending on claim 4, wherein said data processing unit (302) is configured for performing a an electronic scalar product between the features of an object (10, 20) in at least one frame (401) of a first analyzed image stream (400) with the features of other similar objects found in image streams of said plurality of cameras which are included within a maximum radius (R) from the camera of the image stream (400) analyzed.

11. A method for ground object tracking, said method being **characterized by** comprising:

- a step of data processing, by means of a data processing unit (302), said step comprising receiving (1000) or processing a plurality of image streams from a plurality of cameras (201-209) placed in plurality of respective positions in the territory;
- loading (1002) from a memory to a data processing unit (302) at least one electronic file containing a plurality of parameters (500-508) of an object, wherein said plurality of parameters (500-508) contains shape details for at least identifying the type of object (10, 20) in at least one frame (400) of an image stream (401) of said plurality of image streams;
- a further and subsequent step of processing said image streams and of extracting at least one frame (401) from said image stream (400) and electronically processing said frame (401) identifying an object (10, 20) contained therein and electronically associating a plurality of parameters (500-508) thereto upon said electronic processing; and
- a subsequent step of electronic estimation of at least a direction (D) and/or speed of said object (10, 20), and of transmission of data containing an electronic prediction of subsequent and/or previous position of said object (10, 20);
- a step of activation of filtering means of said data processing unit (302) predicting a subsequent and/or previous position of said object (10, 20) in accordance to said direction (D) estimation and at least one of said plurality of parameters (500-508) associated to said object.

**12.** Method according to claim 11, wherein said electronic prediction of position causes the execution of a step of electronically selecting (1006, 1007) at least one further camera among the plurality of cameras (201, 209) transmitting said image streams to the electronic stream receiving means (311), and wherein said data comprise visual indication of the position of said cameras over a territory; said step of electronically selecting at least one further camera being performed by electronic selection means being selectively activated by said filtering means; said step of electronically selecting at least one further camera being recursively repeated.

**13.** A method according to claim 11 or claim 12, wherein said plurality of parameters are metadata which are electronically associated to said object (10, 20) by said data processing unit (302).

**14.** A method according to claim 12 or claim 13, further comprising a step of storing into said memory at least one georeferenced position of each of said cameras (201-209), and further comprising a step of selecting said at least one camera in accordance to an electronic computation of distance and direction (D) over time basing on the respective position of the camera of the image stream (400) analyzed and the respective positions of the resting part of the cameras which are included within a radius (R) from the camera of the image stream (400) analyzed that is at least equal to the travel distance electronically computed in accordance to said speed and direction of the object over a certain period of time.

**15.** A method according to claim 14, further comprising defining a radius (R) which is direction-dependent and comprises electronically storing a road map in at least one memory accessible from said data processing unit (302) and the step of definition of said radius considers said road map previously stored in said least one memory.

**16.** A method according to claim 14 or 15, further comprising a step of performing a an electronic scalar product between the features of an object (10, 20) in at least one frame (401) of a first analyzed image stream (400) with the features of other similar objects found in image streams of said plurality of cameras which are included within a maximum radius (R) from the camera of the image stream (400) analyzed.

**17.** A method according to any one of the preceding claims 11-16, wherein said method comprises the step of electronically extracting the at least one image stream of said at least one camera, and further comprises a step of electronically automatically identifying said object (10, 20) in a subsequent instant of time.

**18.** A method according to any of the preceding claims 11-17, said method further comprising a step of electronically calculating a maximum speed threshold, based on a first parameter of said plurality of parameters stored in said memory and wherein said maximum speed threshold is used for defining said maximum radius.

**19.** A method according to any one of the preceding claims 11-18, further comprising a step of object tracking (403) onto said at least one frame (401), followed by a step of electronic features extraction from said frame (401) and a subsequent step of dimensionality reduction (407), and wherein a step of classification (409) of said object (10, 20) according to at least a first parameter stored in said memory comprises a step of merging and/or processing electronic data received from said electronic feature extraction step and said step of dimensionality reduction.

**20.** A method according to any of the preceding claims 11-19, wherein said estimation is performed in a step of deep learning, made at least partially by said data processing unit (302).

**21.** A method according to any of the preceding claims 11-20, further comprising a step of providing the user with auxiliary means for manually selecting and assigning parameters, to the object (10, 20) yet identified on said at least one frame.

FIG.1

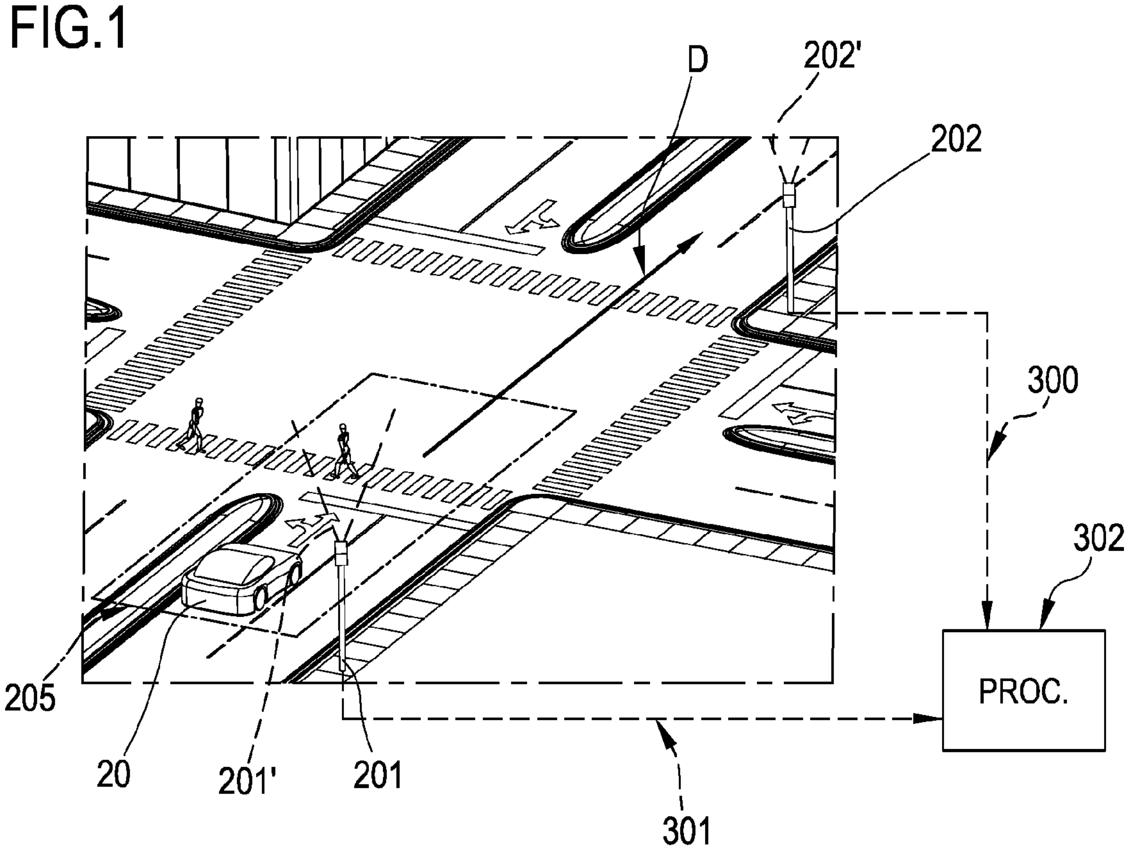
D
202'
202
300
302
PROC.
205
20
201'
201
301

FIG.2

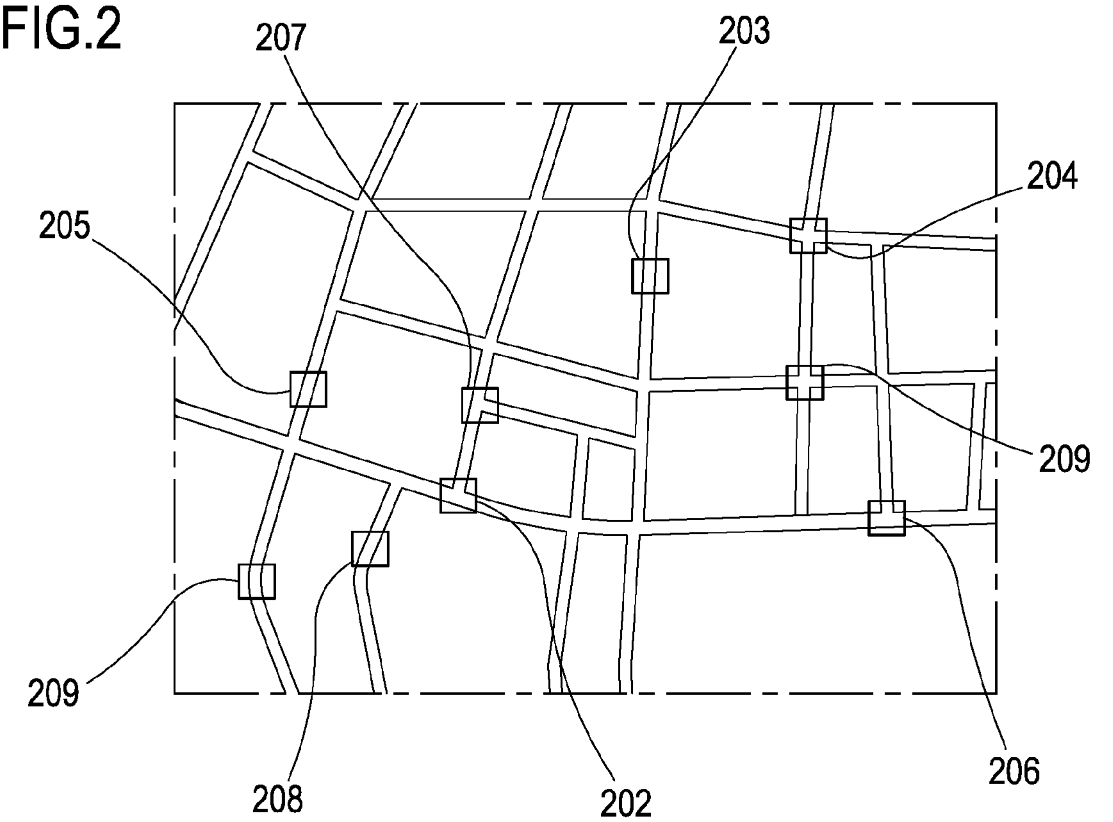
207
203
204
205
209
209
208
202
206

FIG.3

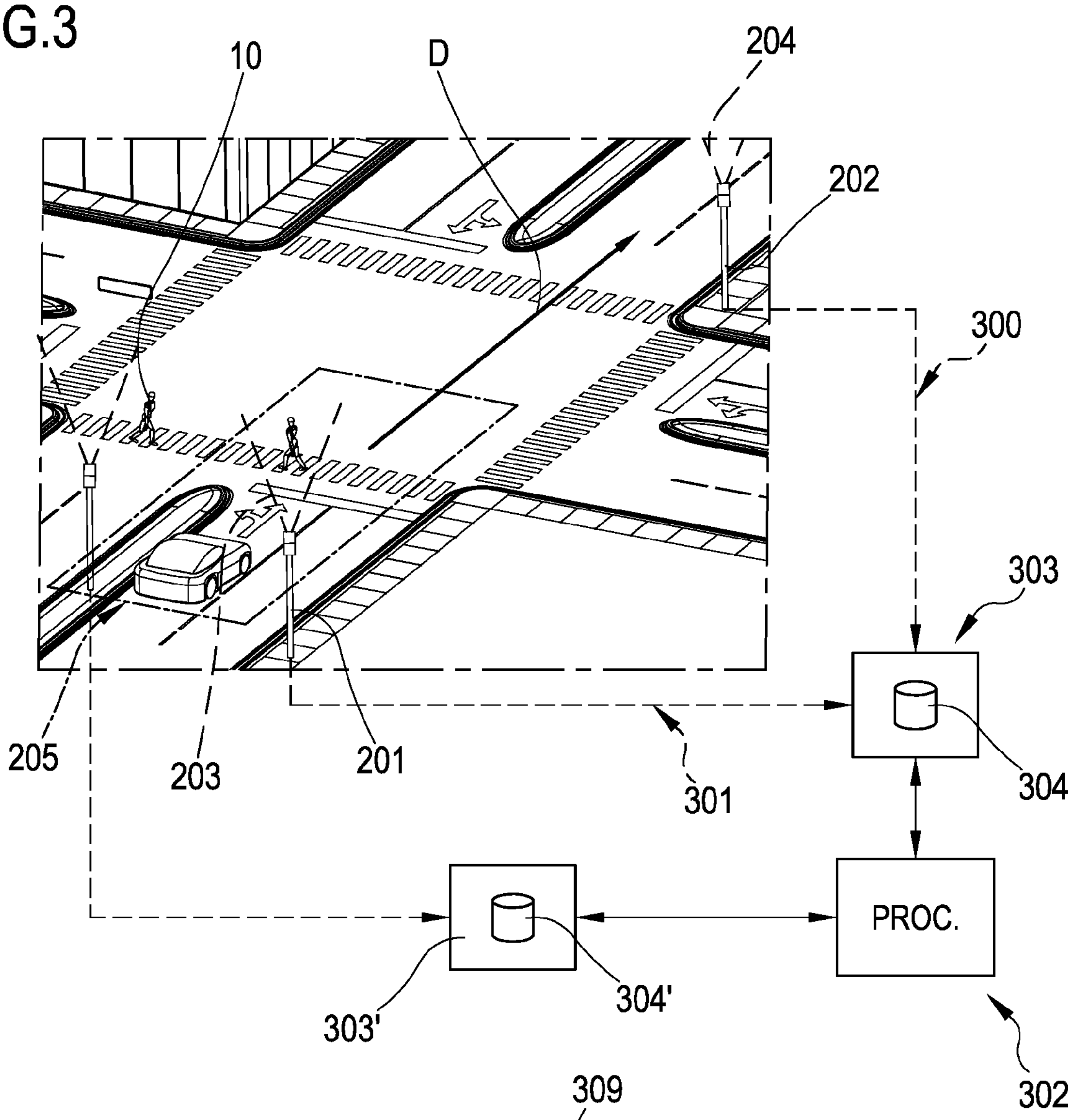
10
D
204
202
300
303
304
205
203
201
301
PROC.
303'
304'
302

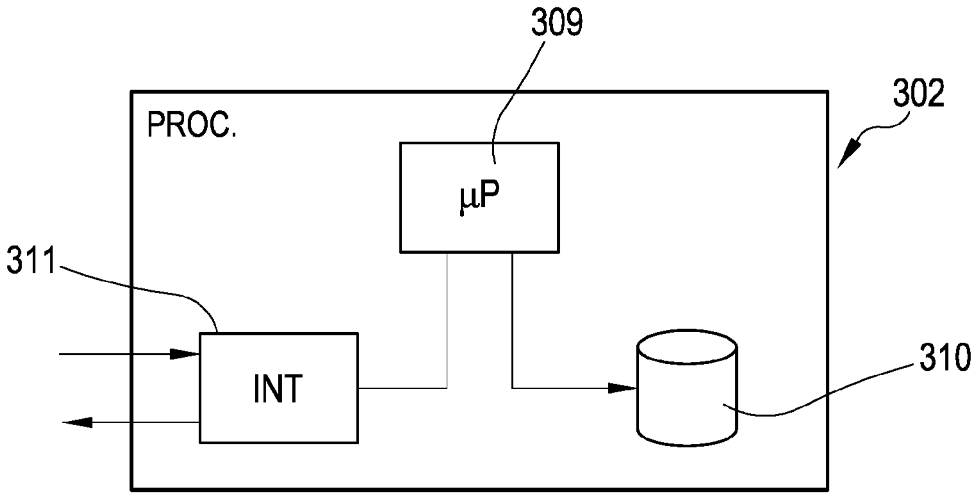
309
302
PROC.
μP
311
INT
310

FIG.4

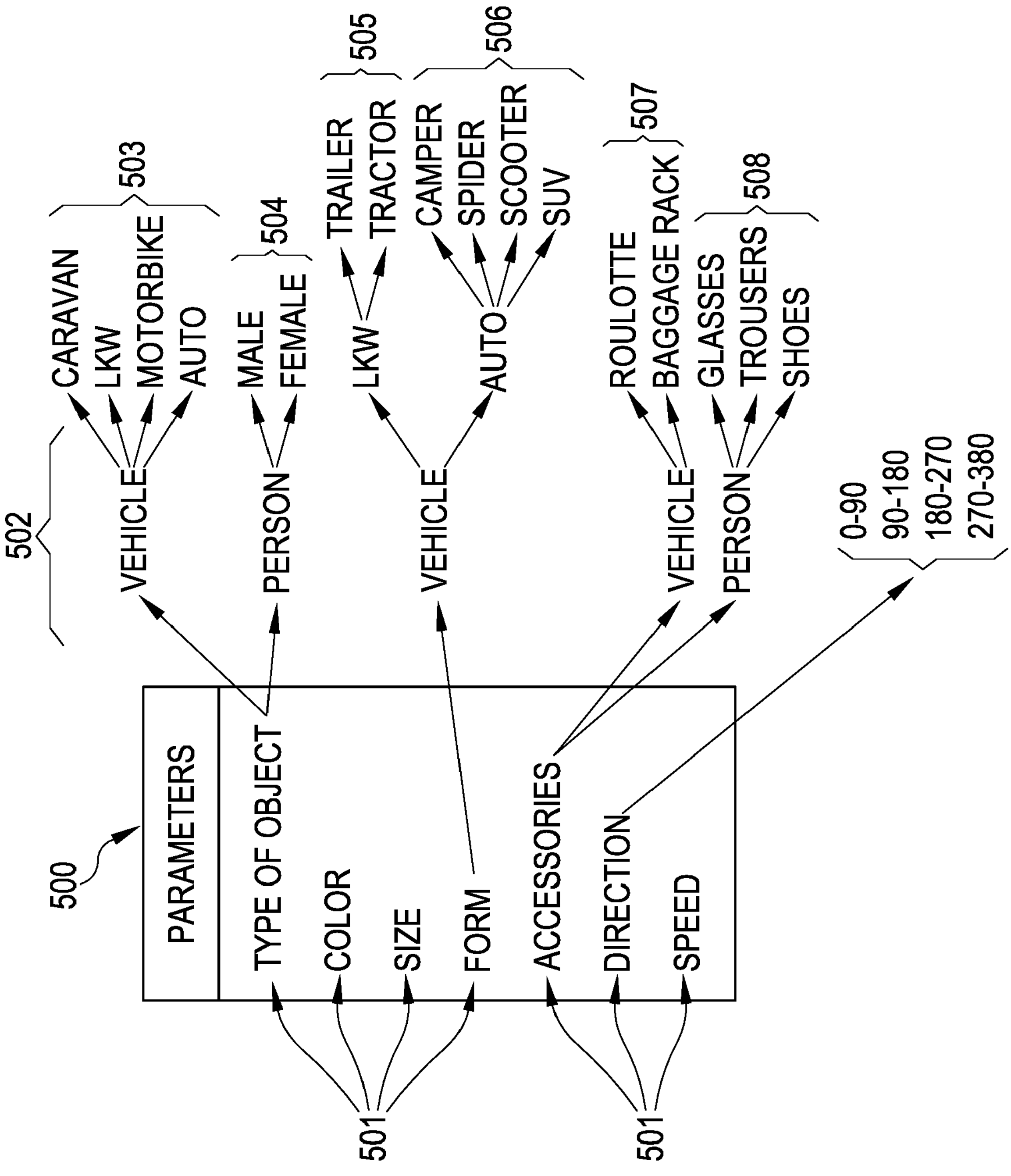
500
PARAMETERS
TYPE OF OBJECT
COLOR
SIZE
FORM
ACCESSORIES
DIRECTION
SPEED
501
501
502
VEHICLE
CARAVAN
LKW
MOTORBIKE
AUTO
503
PERSON
MALE
FEMALE
504
VEHICLE
LKW
TRAILER
TRACTOR
505
AUTO
CAMPER
SPIDER
SCOOTER
SUV
506
VEHICLE
ROULOTTE
BAGGAGE RACK
507
PERSON
GLASSES
TROUSERS
SHOES
508
0-90
90-180
180-270
270-380

FIG.5

FIG.6

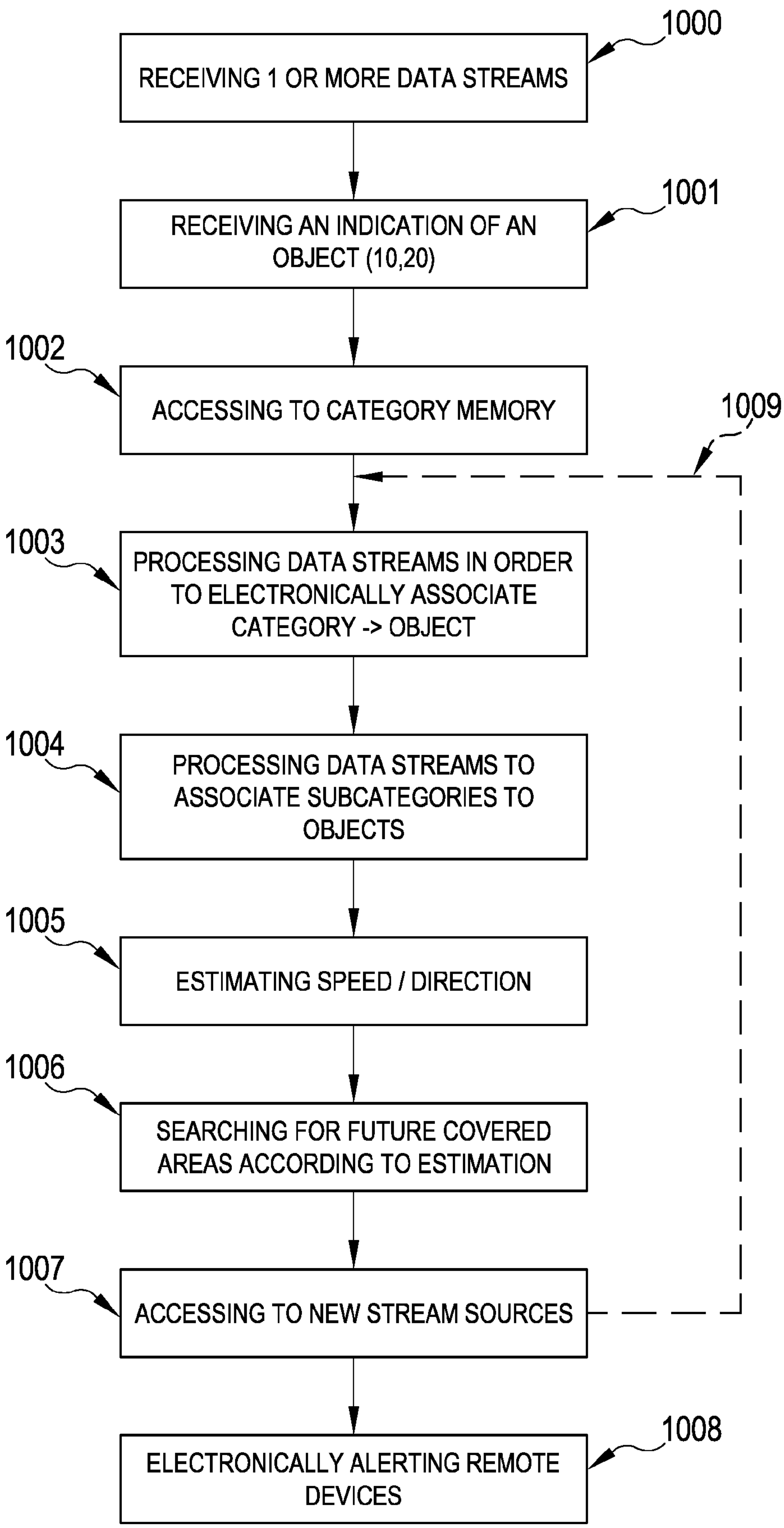
1000
RECEIVING 1 OR MORE DATA STREAMS
1001
RECEIVING AN INDICATION OF AN OBJECT (10,20)
1002
ACCESSING TO CATEGORY MEMORY
1009
1003
PROCESSING DATA STREAMS IN ORDER TO ELECTRONICALLY ASSOCIATE CATEGORY -> OBJECT
1004
PROCESSING DATA STREAMS TO ASSOCIATE SUBCATEGORIES TO OBJECTS
1005
ESTIMATING SPEED / DIRECTION
1006
SEARCHING FOR FUTURE COVERED AREAS ACCORDING TO ESTIMATION
1007
ACCESSING TO NEW STREAM SOURCES
1008
ELECTRONICALLY ALERTING REMOTE DEVICES

FIG.7

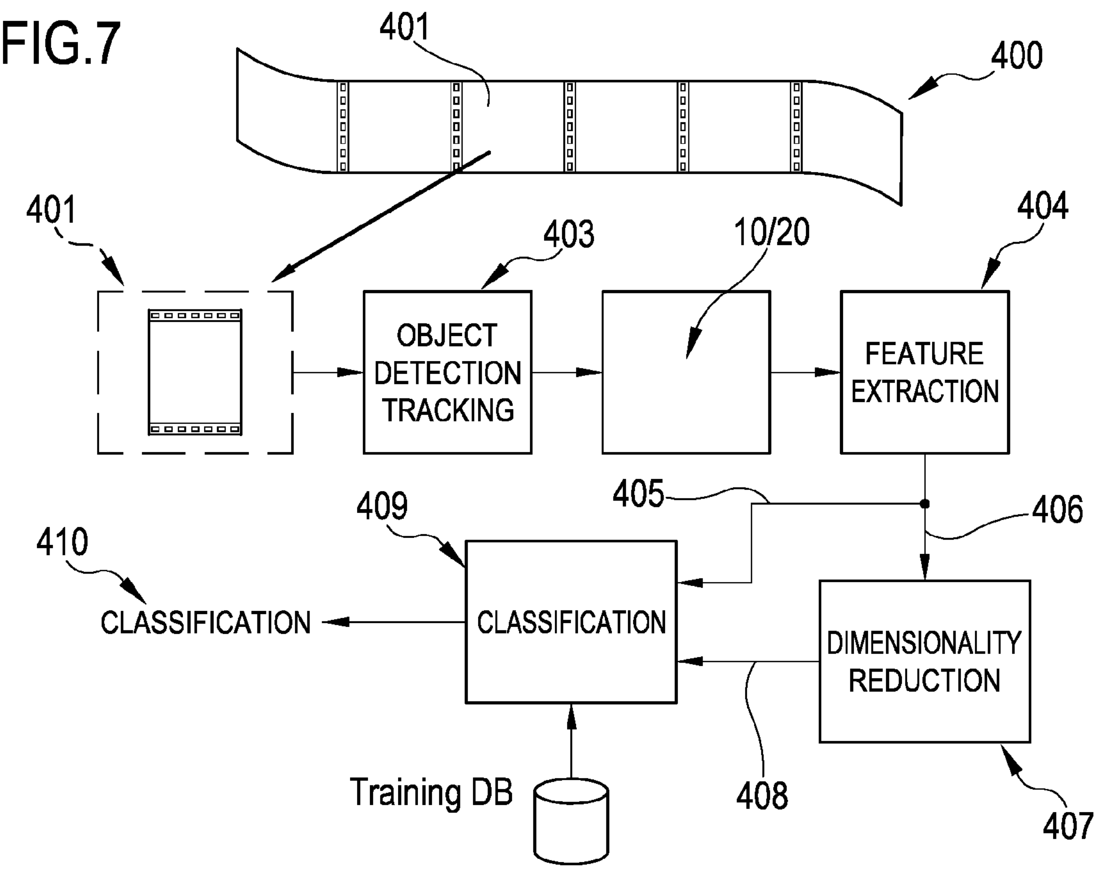
401
400
401
403
10/20
404
OBJECT DETECTION TRACKING
FEATURE EXTRACTION
405
406
409
410
CLASSIFICATION
CLASSIFICATION
DIMENSIONALITY REDUCTION
Training DB
408
407

FIG.8

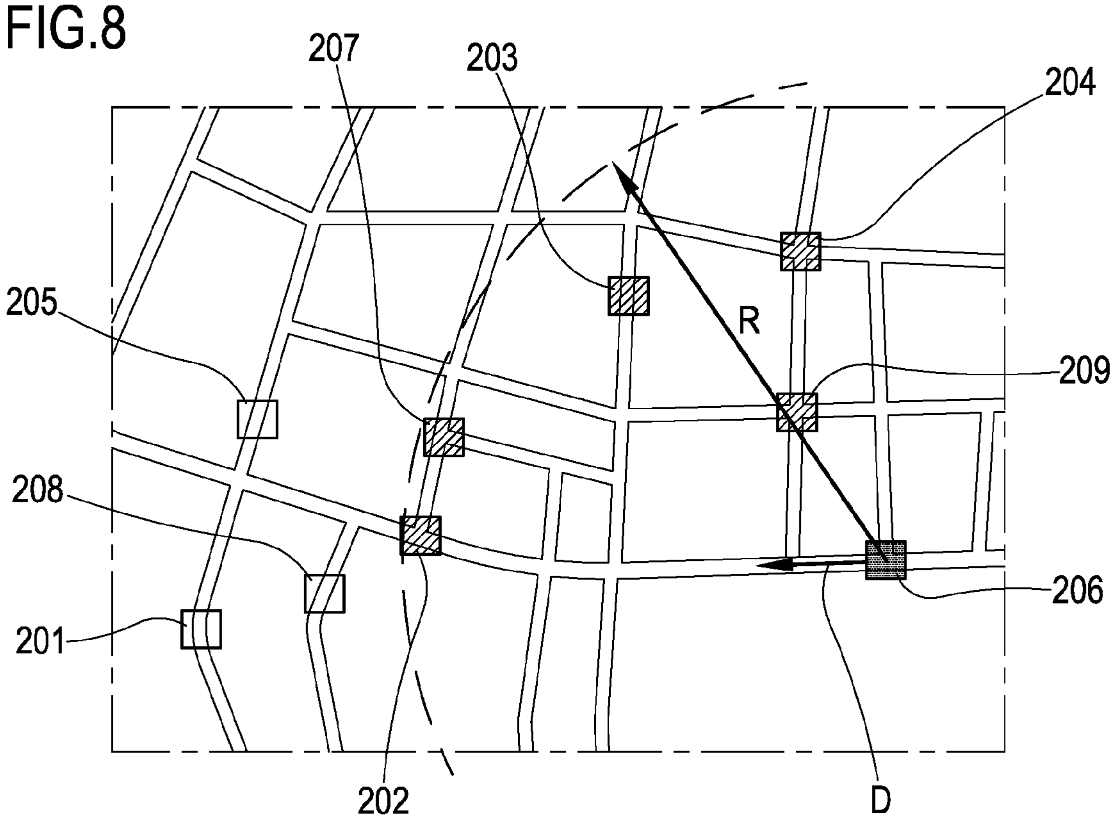
207
203
204
205
R
209
208
206
201
202
D

Europäisches Patentamt
European Patent Office
Office européen des brevets

# EUROPEAN SEARCH REPORT

Application Number
EP 16 16 9562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | EP 2 999 217 A1 (CANON KK [JP])<br>23 March 2016 (2016-03-23)<br>* paragraph [0014] - paragraph [0024] *<br>* paragraphs [0052], [0056], [0059] *<br>* paragraph [0065] - paragraph [0089] *<br>* paragraphs [0112], [0117], [0137] *<br>* figures 1, 4, 7, 11 * | 1-7,<br>11-15,17<br>8-10,16,<br>18-21 | INV.<br>G06K9/00<br>G08B13/196<br>G06T7/20<br>G08G1/16<br>H04N7/18 |
| X<br><br>Y | US 2015/248587 A1 (OAMI RYOMA [JP] ET AL)<br>3 September 2015 (2015-09-03)<br>* paragraph [0023] - paragraph [0041] *<br>* paragraph [0064] - paragraph [0065] *<br>* paragraph [0077] - paragraph [0082] *<br>* paragraphs [0098], [0106] *<br>* figure Fig.7: S707 and S709 * | 1,11<br><br>8-10,16,<br>18 | |
| Y | CN 104 268 594 A (CHINA SECURITY & FIRE TECHNOLOGY GROUP CO LTD; UNIV BEIJING)<br>7 January 2015 (2015-01-07)<br>* paragraph [0077] - paragraph [0084] * | 19,20 | |
| X<br><br><br>Y | CN 103 955 494 A (DATANG LIANZHI INFORMATION TECHNOLOGY CO LTD)<br>30 July 2014 (2014-07-30)<br>* paragraph [0035] - paragraph [0060] *<br>* figures 2, 4, 5 * | 1,11<br><br><br>21 | TECHNICAL FIELDS SEARCHED (IPC)<br>G08B<br>H04N<br>G06K<br>G06T<br>G06F<br>G08G |
| X | GB 2 516 173 A (PANASONIC CORP [JP])<br>14 January 2015 (2015-01-14)<br>* page 10, line 20 - page 11, line 2 *<br>* page 15, line 9 - line 25 * | 1,11 | |

The present search report has been drawn up for all claims

1

| Place of search | Date of completion of the search | Examiner |
|---|---|---|
| The Hague | 10 November 2016 | Wunderlich, Doreen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 16 16 9562

This annex lists the patent family members relating to the patent documents cited in the above-mentioned European search report. The members are as contained in the European Patent Office EDP file on
The European Patent Office is in no way liable for these particulars which are merely given for the purpose of information.

10-11-2016

| Patent document cited in search report | Publication date | Patent family member(s) | Publication date |
|---|---|---|---|
| EP 2999217 A1 | 23-03-2016 | EP 2999217 A1 | 23-03-2016 |
| | | JP 2016063468 A | 25-04-2016 |
| | | US 2016084932 A1 | 24-03-2016 |
| US 2015248587 A1 | 03-09-2015 | JP WO2014041912 A1 | 18-08-2016 |
| | | US 2015248587 A1 | 03-09-2015 |
| | | WO 2014041912 A1 | 20-03-2014 |
| CN 104268594 A | 07-01-2015 | NONE | |
| CN 103955494 A | 30-07-2014 | NONE | |
| GB 2516173 A | 14-01-2015 | CN 104284146 A | 14-01-2015 |
| | | DE 102014213553 A1 | 15-01-2015 |
| | | GB 2516173 A | 14-01-2015 |
| | | JP 5506989 B1 | 28-05-2014 |
| | | JP 2015019248 A | 29-01-2015 |
| | | US 2015015718 A1 | 15-01-2015 |

EPO FORM P0459

For more details about this annex : see Official Journal of the European Patent Office, No. 12/82